# EUROPEAN PATENT SPECIFICATION

(11) **EP 1 504 686 B1**
(45) Date of publication and mention of the grant of the patent: **04.04.2007**
(21) Application number: 03396074.1
(22) Date of filing: 31.07.2003
(51) Int. Cl.: A41D 27/24

(54) **Making watertight stitched seams for garments**
Herstellung von wasserdichten genähten Dichtungen für Kleidung
Fabrication de joints cousus étanches à l'eau pour vêtements

(43) Date of publication of application: 09.02.2005
(73) Proprietor: Ursuk Oy, 20521 Turku (FI)
(72) Inventor: Kallionpää, Marko Juha, 20900 Turku (FI)
(74) Representative: Laako, Tero Jussi

(56) References cited:
- DE-A- 19 917 369
- GB-A- 979 829
- GB-A- 2 046 171
- GB-A- 2 215 660
- US-A- 4 446 181
- US-A- 5 670 577

## Description

The invention relates to a method for making watertight stitched seams for garments, said method comprising the steps of: utilizing laminated fabric as a material for the garments, composed of at least a woven fabric and a waterproof polymer film laminated together, said laminated fabric having an outer surface and an inner surface, and including at least two sections, i.e. first and second sections, to be attached together, said sections including edges; the laminated fabric or fabrics are arranged so that the edges of the sections that should be mutually attached are set in a mutual butt position, the laminated fabric/fabrics are sewn together by a stitch including thread through stitch punctures and a stitch width, said stitch being parallel with the edges arranged in butt position and said stitch width extending across the edges arranged in butt position; whereafter the stitch is sealed by an adhesive strip comprising at least woven fabric coated by an adhesive layer, by fastening the adhesive strip by means of its adhesive layer to the laminated fabric at said stitch. The invention also relates to a watertight stitched seam made according to said method and used in garments.

Thus the invention relates to watertight stitched seams employed in garments, such as coats, trousers, overalls etc. Traditionally stitched seams in garments are made either by arranging the fabric edges in an overlapping fashion, so that the inner surface of the first fabric is set against the outer surface of the second fabric, and by sewing the fabrics together in the overlapping section - this type of stitched seam is called an overlapping seam or overlap seam; or by arranging the outer surfaces of both fabrics against each other so that the edges match, and by sewing the fabrics then together in the direction of the edges, and by then straightening the joined fabrics out, so that the stitch and the seam allowances are left inside the garment - this type of stitched seam is called a flat seam. In addition, there are known several different and more complicated ways to sew seams together. After sewing, the seams are sealed by taping. One of the drawbacks is that first of all the seam joints are remarkably thicker and more rigid than the other areas of the fabric, wherefore the fitting and convenience of wear of the garment may be lacking, and secondly the fact that particularly the junction areas of several seams become even thicker, wherefore they are difficult to sew and to seal.

The publication US-4 920 575 describes a protective garment made of at least a waterproof material that is a laminate of cloth and a five-layer film. The seams in the protective garment may be butt seams, where the edges of the laminate fabric are placed against each other so that the film side is facing outwards, and a strip of the same material is placed on top of the butt joint, so that the film side is set against the film side of the laminate fabric, whereafter said elements are joined together by means of heat. The thermal bonding is carried out by feeding the seam joint through a polyurethane roller and a teflon roller under the pressure of 4 psi (= 27.8 kPa), so that the teflon roller is heated up to 200° F (= 93° C), and the seam joint is preheated immediately before the rolling by a thin air jet with the temperature 440° F (= 227° C). According to said publication, a stitch is not applied, but the joint is only a welding joint between laminates. This type of a welding joint may be suitably thin in garments, but its strength and durability are extremely dubious.

The publication GB-979 829 describes a flat seam that was already dealt with above, where the rubber layers provided on the outer fabric surface are placed against each other, and the edge sections are folded inwards, with rubber layers against each other. Said edge sections are attached, at least in the folded parts, by a stitch, and on top of the seam, on the outer fabric surface, there is placed a sealing strip that by pressure and heat is vulcanized to the rubber layers of the outer surface, so that the material of said strip also is allowed to flow into the narrow interstitches of the seam. This kind of sealed stitched seam may well be sufficiently strong and endurable, but it results in the above described extremely thick and rigid seams, as well as particularly thick and "hard" sections in seam junctions. Also the publication GB-2 215 660 describes a flat seam that is only sealed by a tape made of a thermoplastic material, which tape can be used either with a release film or without it, said release film being stripped off at some stage of the manufacturing process. This kind of tape that is made of adhesive material only is easily broken, in which case the garment looses its water tightness. In said publication, the sealing tape is particularly attached to the thermoplastic coating of a woven fabric (i.e. "...fused to the thermoplastic coating.").

The publication GB-2 046 171 introduces a composite material composed of a relatively thin elastomer film placed on top of a stretchable fabric. There also is shown an overlapping or overlap seam of the type described above, a flat seam described above and a butt seam realized by using a serpentine stitch, said seams being sealed by a strip that is composed of elastomer and woven fabric in similar fashion as the composite material itself. The employed elastomer film is a polyethylene terephthalate film glued onto the woven surface by silicone rubber, such as dimethyl silicone elastomer. Because this type of polyethylene terephthalate films do not directly stick, narrow adhesive strips are left in between them, but only at the tape edges. The employed adhesive is silicone rubber (RTVS) that is vulcanized at room temperature. Consequently, in said publication the elastomer of the sealing tape is set against the elastomer of the composite material, and the silicone rubber arranged at the sealing tape edges is allowed to be polymerized at room temperature. In this kind of a manufacturing method, the polymerization of silicone rubber takes a relatively long time, which means that the method is slow and therefore expensive. In addition, this kind of seam sealing material requires that the watertight film of the laminate serves as one of the outer surfaces, which restricts the use of possible laminate types. Because the tape is only attached at the edges, and even there only at an extremely thin film, it is detached fairly easily, whereafter the seam loses its tightness. Yet another drawback is that when using for instance the described butt seam, its serpentine stitch is left visible on the outer surface of the garment, in which case it is easily worn when the garment is used and leads to the raveling of the seam.

The publication WO-00/63007 describes a seam for which there are first sewn, in a way apparent only from the drawings of said publication, the material parts of a functional layer consisting of a waterproof, water-vapor permeable functional film by a butt seam and a zig-zagstitch. Next said stitch is sealed, by a hot-seamable tape containing woven fabric, which is particularly attached to the water-vapor permeable and waterproof film of the functional layer. The functional layer mentioned in the publication, which was the target of sewing, forms only a part of the material layers of the product, and thus, according to the publication, there is glued an outer material part on that surface of the sewn and tape-sealed functional layer where the sealing tape is placed. Even for this kind of seam, it is difficult to ensure sufficient strength, and in addition, the gluing together of the functional layer sewn in shape according to a coat or a pair of trousers and the corresponding outer material part in the way taught by the publication is extremely difficult. Primarily and in a detailed manner the publication describes only shoes, and with shoes, it is sensible to make molds for the adhesive compression. The manufacturing of molds for various sizes of coats and trousers results in an immoderately high price of the product.

Thus it is the object of the present invention to realize a method for manufacturing such watertight seams that would be as thin as possible and flexible also at the seam junctions. Another object of the invention is a described method, with a high production rate. Yet another object of the invention is to realize a watertight seam type that has a high strength but is not sensitive to the effects of mechanical wearing.

The above described problems are solved and the defined objects achieved by the method of the invention, characterized by what is set forth in the characterizing part of claim 1, and by the seam according to the invention, characterized by what is set forth in the characterizing part of claim 8.

Now it has surprisingly been found that it is possible to create a watertight stitched seam that is both thin or flat and at the same time extremely durable for wear, by the following procedure: the material provided for the seam is laminated fabric, the edges of the sheets of fabric are arranged in butt contact, the sheets are sewn together by a wide stitch extending over the butt joint, the thread used in sewing is at least partly composed of natural fiber, and finally the seam is sealed by an adhesive strip, the glue contained in the strip being melting and sticking when heated. In addition, the adhesive strip is welded at least to the laminated woven fabric. The obtained seam becomes extremely thin, because the overlapping and the several layers of laminated fabric can be avoided, and extremely strong, because the thread made of natural fiber or containing natural fiber endures the melting temperature of the glue contained in the adhesive strip without being damaged, and consequently in the final seam, the stitch really carries at least part of the strain directed thereto. On the other hand, the prior art differs from the invention in that known methods use artificial fiber thread, such as nylon thread, which either melts completely or is at least weakened in strength when subjected to the melting temperature of the glue contained in the adhesive strip, which means that the stitch in fact serves only as a basting, and in the final seam the adhesive strip plus the glue contained therein carry all the strain directed thereto. Likewise, another difference from the present invention is that the prior art uses either an adhesive strip that is only attached at the edges, so that the stitch is not at all in contact with the glue, which means that the tightness of said seam is unreliable, at least in the long run. In the method and seam according to the invention, the glue penetrates into the woven fabric, into the needle holes with through going thread(s) created by the stitch punctures, and in between the laminated fabric edges that are in butt position, thus creating an absolutely reliable tightness.

The invention is described in more detail below with reference to the appended drawings.

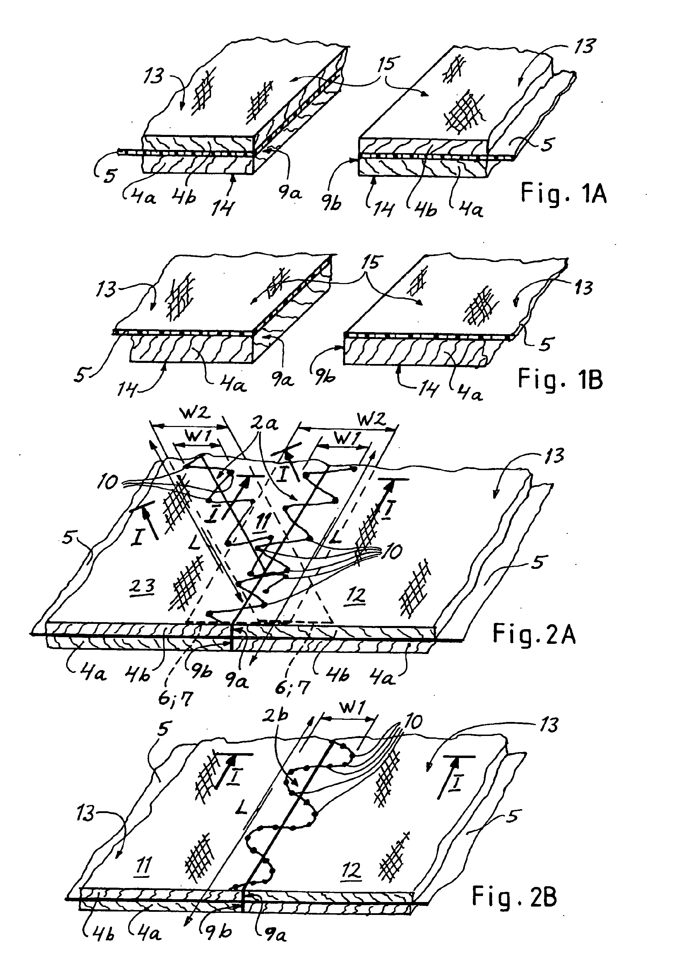

Figs. **1A** and **1B** illustrate the interconnected sections and the respective edges of laminated fabrics, composed of two woven fabric layers and of a waterproof polymer film provided therebetween, attached to the woven fabric layers, and respectively of one woven fabric layer and attached waterproof polymer film, seen in an axonometric view.

**Figs. 2A** and **2B** illustrate three and respectively two sections of laminated fabrics, with their edges in mutual butt contact, said sections being stitched together by wide zig-zagstitches according to the invention, and respectively by a wide intermediate serpentine zig-zagstitch according to the invention, seen in an axonometric view.

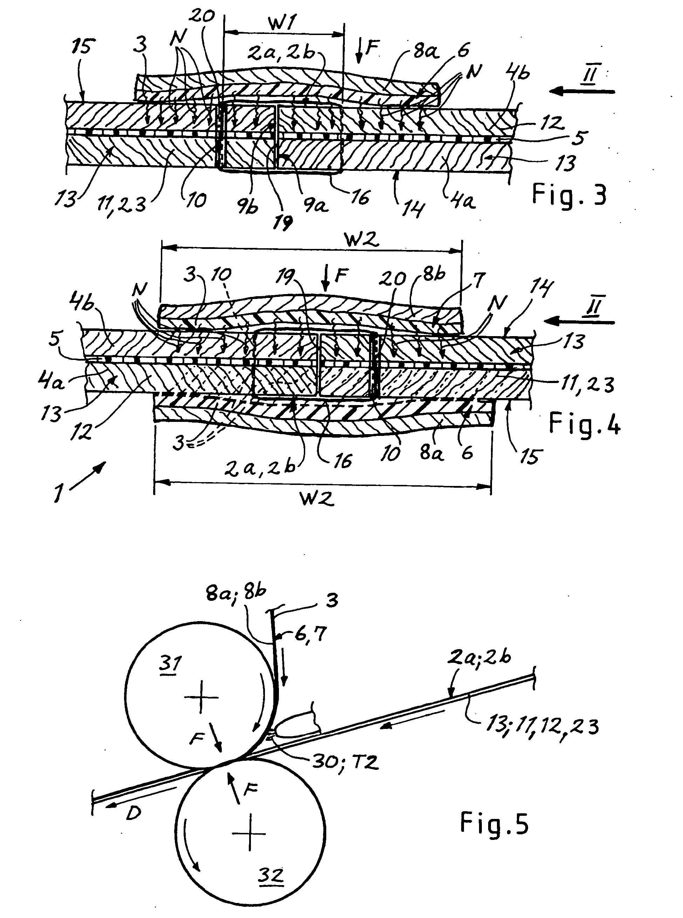

**Fig. 3** illustrates a first preferred embodiment of the stitched seam according to the invention. It includes two interconnected sheets of laminated fabric, joined together by a stitch according to the invention, where the employed thread contains natural fiber, as well as an adhesive strip that is after sewing welded onto one surface of the laminated fabrics to cover the stitch, seen in a vertical cross-section against the laminate surfaces, along the planes I-I of figures 2A and 2B.

**Fig. 4** illustrates another preferred embodiment of the stitched seam according to the invention, where the stitched seam according to figure 3 is further provided with another adhesive strip that is, after the sewing and welding in place of the first adhesive strip, welded onto the other surface of the laminated fabrics, to cover the stitch, seen in similar view as in figure 3.

**Fig. 5** is a schematical illustration of an arrangement whereby the adhesive strip is welded on the surface of the laminated fabrics, onto the stitched seam connecting the two sheets thereof, seen from the side, in a direction that is perpendicular to the seam length and parallel to the laminate sheet surfaces, in the direction II of figures 3 and 4.

In order to make watertight stitched seams 1 in garments, there is first of all employed, as the garment material, such laminated fabric 13 that is composed at least of mutually laminated woven fabric layers 4a and/or 4b and of a waterproof polymer film 5 being adhered to each other over their whole surfaces. Thus the laminated fabric 13 can be a material illustrated in figure 1B, where the woven fabric layer 4a constitutes the outer surface 14 of the garment, and the waterproof polymer film 5 constitutes the inner surface 15 of the garment. However, it is more advantageous to use the laminated fabric 13 illustrated in figure 1A, which is composed of two woven fabric layers 4a, 4b and of a waterproof polymer film 5 attached in between them, because in that case the polymer film 5 that is waterproof but in many cases permeable to water vapor and air, is better protected against mechanical damage. Thus the polymer film can be a microporous plastic film that is permeable to gas but impermeable to liquid, or a compact plastic film that is impermeable to both liquid and essentially gas, or a film made of synthetic rubber or natural rubber. In this case, the first woven fabric 4a forms the outer surface 14 of the laminated fabric, and the second woven fabric layer 4b forms the inner surface 15 of the laminated fabric. The first 4a and second 4b woven fabric layer can be made of a similar fabric or a different fabric, and both of them can be manufactured either of synthetic fibers suitable in the purpose of use, or of a synthetic fiber mixture, of natural fibers or of natural fiber mixture, or of a mixture of natural and synthetic fibers. In order to manufacture a garment, the employed material constitutes at least one laminated fabric 13, thus for instance when making a sleeve of a garment, said material including at least two interconnectable sections 11, 12 with edges 9a, 9b. In order to manufacture a garment, there often are also used two pieces of laminated fabric 13, each of them including a specific interconnectable section 11, 12 with edges 9a, 9b. Further, for manufacturing a garment, there can be used three pieces, as in figure 2A, of laminated fabric 13, each of said pieces including specific, interconnectable sections 11, 12, 23 with edges 9a, 9b, the number of which in this case is three, i.e. the same as the number of the sections, when possible bends in the edges are not counted. Thus the laminated fabric may in principle be cut into any number of pieces with their interconnectable sections, as long as the sections have edges with shapes that are suitable to be arranged in a designed butt contact with each other. It should be understood that the laminated fabric 13 may comprise even more polymer films than just one, and even more woven fabric layers than the described two. The method and stitched seam according to the invention are feasible irrespective of the number of laminate layers.

In order to attain a watertight stitched seam 1, the interconnectable edges 9a and 9b of the laminated fabric or fabrics are arranged in a mutual butt contact, i.e. for instance the first edge 9a against the second edge 9b, and at least locally on a roughly same plane, whereafter said one or several laminated fabrics 13 are sewn together by a stitch 2a, 2b comprising through punctures 10 for through going of the thread or threads and a stitch width W1. The stitch punctures 10 of the stiching needle with the threads go through both of the laminated fabric layers, as the stitch threads 16, i.e. upper thread and lower thread, form a mutual "knot" in the middle of the laminate inside the through puncture holes. This sewing technique is known as such, wherefore it is not described in more detail here. The length L of the stitch 2a, 2b is parallel with the edges arranged in butt contact position, and the stitch width W1 extends over the edges 9a, 9b arranged in butt position, so that the stitch connects the adjacent sections 11, 12, 23 of the laminated fabric or fabrics together. Said stitch can be an intermediate zig-zagstitch 2b or a zig-zagstitch 2a or other corresponding stitch that is thus extended at least to the first 11 and second section 12 and connects them together.

According to the invention the stitch 2a, 2b is made by using a thread 16 that contains at least one natural fiber. The employed thread can be a thread exclusively made of natural fiber, or a thread 16 made of a combination of natural fiber and a suitable synthetic fiber. According to current understanding, natural fibers are composed mainly of cellulose, when they represent vegetable fibers, or keratin, when they represent animal fibers. The employed natural fiber can be cotton fiber and/or flax fiber and/or silk or possibly kapok or some other natural fiber suited to be used as sewing thread, such as for example wool. In tests it has been found out that cotton works very well, because it is resistant to heat, it has a high tenacity and it is very flexible. Fibers such as hemp and sisal tend to be too coarse and hence too rigid to be used in garments, although they are otherwise possible in principle. If the thread also contains a synthetic fiber component, it should be chosen among polymers that maintain at least the major part of their strength properties at the melting temperature T1 of the glue 3 of the adhesive strip 6, 7, said temperature being generally at least 135° C or within the range 140° C - 155° C. Polyester fiber, and particularly aramid fiber are sufficiently resistant to heat. However, the thread should contain an essential amount of natural fiber, and the current estimate is that the natural fiber content should be over 35 %, or advantageously at least 55 % or at least 70 %. According to the invention, there is used a thread 16, with a heat resistance or hot tenacity or hot strength which at a defined high temperature, such as the melting temperature T1, is at least 80 % of the cold strength of the fibers at room temperature, i.e. of their tenacity within the temperature range where the garments are worn. Most natural fibers endure remarkably higher temperatures than said glue melting temperature T1, which is advantageous, because the glue 3 is generally melted by blasting with air that has a temperature within the range T2 = 500° C - 550° C. In that case the glue temperature may in reality be substantially higher than the melting temperature. Consequently the use of a thread 16 made of natural fibers, the thermal strength of which at the temperature 200° C, mostly at the temperature 250° C and possibly even at the temperature 300° C is at least 80 % of the cold strength of said fibers, renders remarkable security and gives more alternatives for the use of various types of glues 3. In any case threads made of natural fibers are not essentially damaged at the temperatures mentioned above, wherefore they are, after a possible short-time heating, in a condition that essentially corresponds to their original condition. It is also possible to define that the stitch 2a, 2b is made by using a thread 16 that contains an essential amount of a fiber that does not melt. Natural fibers do not melt as most synthetic fibers do, but they are burned or charred when the temperature rises extremely high. However, such temperatures are not reached when melting the glue 3 of the adhesive strip 6, 7.

Next the stitch 2a, 2b is sealed by at least one adhesive strip 6, 7 composed of at least a woven fabric 8a, 8b coated by a layer of glue 3, by attaching the adhesive strip, by means of its adhesive layers, to the laminated fabric at said stitch, so that the adhesive strip is attached to the laminated fabric, thus covering said stitch. In the adhesive strips the woven fabrics 8a, 8b are made of a suitable cloth that can be of the same material as the fabric in the laminated fabrics 13 proper, or one or both of them can represent a different type than the woven fabric layer 4a, 4b or layers 4a, 4b of the woven fabric. In most cases that adhesive strip 7 that is placed on top of the stitched seam 1 and against the outer surface 14 has a different type of woven fabric 8b than the woven fabric 8a of the adhesive strip 6 that is placed on top of the same stitched seam on the side of the inner surface 15. The glue 3 used in both adhesive strips 6, 7 can be of the same type, although it can also represent a different type. According to the invention, the glue 3 has a melting temperature T1 that is substantially higher than room temperature, being thus at least 135° C or typically within the range 140° C - 155° C. Moreover, the glue 3 of the adhesive strip 6 and/or 7 represents a type that is adhesive only at the melting temperature T1 which is substantially higher than room temperature. In the adhesive strip 6, 7 the glue 3 extends along the whole strip width W2, which also is larger than the stitch width W1, in order to achieve the effect to be described below. The adhesive strip 6 or 7 is heated at least up to said melting temperature T1 and compressed F against said outer surface 14 or inner surface 15 located on the first and second sections 11, 12 of the woven fabric layer, as well as against said stitch 2a or 2b. Now the glue melts, and the molten glue 3 penetrates - which process in figures 3 and 4 is indicated by arrows N - owing to the compression into the woven fabric layers 4a, 4b of the laminated fabric/fabrics, into the holes 20 created by the stitch punctures 10, and into between 19 the edges 9a, 9b placed in butt position. Finally the glue 3 is allowed to harden. The hardening can be merely solidification, or it can be connected by polymerization. The above described joining of the adhesive strip to the woven fabric layers and threads 16 can be called a welding joint, because the joint is created through the molten phase of the glue.

According to the invention, the above described sealing by the adhesive strip 6 or 7 is first carried out on the side of the outer surface 14 of the laminated fabric/fabrics, or on the side of the inner surface 15 thereof. Thereafter there is performed a corresponding sealing by the adhesive strip 7 or 6 on the side of the inner surfaces 15 of the laminated fabric/fabrics, or respectively on the side of the outer surfaces 14 thereof. The latter sealing is carried out in similar fashion as the above described first sealing. In a preferred embodiment of the invention, there are performed both sealing operations, in which case the stitched seam 2a, 2b is covered both on the side of the outer surface 14 and the inner surface 15. This must be done particularly when there is used a laminated fabric 13 composed of two woven fabric layers 4a, 4b and of a film 5 placed therebetween, in which case the glue 3 has penetrated - this condition is in figure 4 indicated by the dashed extensions of the hatching for glue into the woven fabric layer - at both adhesive strips 6, 7 into both layers 4a and 4b of the woven fabric, on both sides into the holes 20 created by the stitch punctures 10 and on both sides into between 19 the edges 9a, 9b placed in butt position. In principle it is naturally possible to use only one adhesive strip, which in that case is preferably an adhesive strip 7 welded on the side of the outer surface 14. In figure 4 there is indicated by dotted lines how the glue in the adhesive strip 6 has penetrated into the first woven fabric layer 4a as a result of the attaching of the first adhesive strip, and simultaneously how the glue 3 of the second adhesive strip 7 penetrates - indicated by arrows N - into the second woven fabric layer 4b. Any additional layers are not glued onto either of the adhesive strips 6 or 7, but the gluing of one adhesive strip 6 or 7, or two opposite adhesive strips 6 and 7, is the last step in the method. This does not, however, exclude the possibility that the adhesive strips cross over each other, i.e. that the adhesive strips on the same side are superimposed in the junction areas of more than two laminate sections 11, 12, 23, where the seams meet and also the stitches 2a, 2b cross over each other, which situation is illustrated in figure 2A. Also in this case the adhesive strip is placed outermost without any additional glued layers. Consequently, the woven fabrics 8a, 8b of the adhesive strip 6, 7, together with the sewn laminated fabric 13, typically form ready-made and impermeable outer surfaces 14, 15, which does not prevent from providing the garments for instance by linings or other additional structural elements, which, however, are not glued or laminated to the product seamed according to the invention.

The obtained result is a watertight stitched seam 1 according to the invention, where the thread 16 of the stitch 2a, 2b is essentially undamaged in the contact areas of the glue and thread of said adhesive strip. At least one adhesive strip 6 and/or 7 is in contact with or welded particularly to the laminated fabric 13, at least with one woven fabric layer 4a and/or 4b and stitch thread 16 along the measure of the stitch width W1, and naturally along the stitch length L in question. The glue 3 of the adhesive strip glue has penetrated into the woven fabric layers 4a, 4b of the laminated fabric, into the holes 20 created by the stitch punctures 10 and in the space between 19 the edges 9a, 9b placed in butt position. In the most advantageous embodiment of the invention, there are two adhesive strips 6 and 7, one against the outer surface 14 of the laminated fabric and another against the inner surface 15 of the laminated fabric, and both adhesive strips are in contact with and welded to the woven fabric layers 4a, 4b and stitch thread 16 along the measure of the stitch width W1 and along the stitch length L in question. The glue 3 has penetrated into the woven fabric layers 4a and 4b of both laminated fabrics, into the holes 20 created by the stitch punctures 10 and into the space between 19 the edges 9a, 9b placed in butt contact. Naturally the adhesive strip can also be welded against the polymer film of a laminate composed of only one woven fabric layer 4a and of a polymer film 5.

In a case where the laminated fabric has three sections 11, 12, 23 or even more sections, the watertight stitched seam comprises two stitches 2a according to the invention, said stitches crossing over each other, as is indicated by dotted lines in figure 2A. On top of both stitches 2a, there are, according to the invention, welded adhesive strips 6, 7. When the stitched seam thus comprises at least two intersecting stitches 2a, said at least one upper adhesive strip 6 and/or 7 extends at least over one lower adhesive strip 6 and/or 7, as is indicated by dotted lines in figure 2A. Now the glue 3 contained in the upper adhesive strip has penetrated into the woven fabric 8a, 8b of the lower adhesive strip.

For making the stitch, any suitable sewing machine can be used in the method. The adhesive strip 6, 7 is attached on the stitch and the laminated fabric by moving the stitched seam in the direction D of the length L thereof and by feeding the adhesive strip at a substantially equal speed and in the same direction D against the stitch and the laminated fabric. At the same time, the adhesive strip 6, 7 is heated at least by hot air blasting 30 with an air temperature T2 that is higher than said melting temperature T1, and by compressing F it immediately thereafter against the surface of the laminated fabrics in a perpendicular direction. The compression F is preferably achieved by feeding at least the first and second sections 11, 12 of the laminated fabrics at the stitch 2a, 2b provided therebetween, together with the adhesive strip 6 or 7, in between rotating compression rollers 31, 32. In the tests that were carried out, the air temperature T2, i.e. the temperature of the nozzle in the hot air blasting 30 was 530° C, the temperature of the upper compression roller was about 75° C and the speed in the direction D was within the range 1.5 m/min - 3 m/min, when the employed adhesive strip was *MELCO*™ tape *T-2400X* and *T- 5500.* When the threads 16 that were employed in the making of the stitches 2a, 2b were mainly composed of natural fibers, the threads in the end product, after welding the adhesive strips 6 and 7, were in excellent condition, and the obtained seam strengths were extremely high. In reference tests, where ordinary synthetic fiber threads were used, the threads had completely melted during the welding of the adhesive strips, and the seam strengths were remarkably lower than in the seams according to the invention. For attaching the described adhesive strips, there are commercially available various different devices, but these devices may require different temperature and speed settings, wherefore they are not explained in more detail here.

Consequently, in the present invention there is formed a watertight seam between two waterproof sheets of material, mainly composed of fabric, i.e. between the edges of laminated fabric sheets, which laminated fabric is, however, extremely flexible in order to be suitable for garments. The thickness of the obtained butt seam is only slightly larger than the thickness of the fabrics, and the butt seam is nearly as flexible as the rest of the fabric areas.

## Claims

1. A method for making watertight stitched seams (1) in garments, said method comprising the steps of:
- providing a laminated fabric (13) composed at least of a woven fabric layer (4a, 4b) and a waterproof polymer film (5) which are laminated together, and including at least first and second sections (11, 12) to be attached together, said sections having edges (9a, 9b);
- positioning the edges (9a and 9b) of the sections of said laminated fabric or fabrics to be attached together in a mutual butt position;
- sewing the laminated fabric/fabrics together by a stitch (2a, 2b) comprising stitch punctures (10) for a thread or threads (16) and a stitch width (W1), said stitch running parallel with the direction of the edges arranged in butt position, and said stitch width extending across the edges (9a, 9b) arranged in butt position; and
- sealing the stitch (2a, 2b) by adhesive strip (6, 7) composed at least of a woven fabric (8a, 8b) coated by a layer of glue (3), which glue (3) has a melting temperature substantially higher than room temperature (T1);
- attaching said adhesive strip, by means of its adhesive glue layer, to the laminated fabric(s) at said stitch by heating the adhesive strip (6 or 7) at least up to said melting temperature;
- allowing the glue (3) to harden,
**characterized in that** the method further comprises in combination the steps of:
- utilizing laminated fabric (13) that is a garment material constituting garment outer surface (14) and inner surface (15);
- carrying out said sewing by using a thread (16) that contains at least one natural fiber; and
- compressing (F) said adhesive strip, the glue thereon extending over the whole strip width (W2) of the adhesive strip, on the first and a second sections (11, 12) at least against said outer surface or inner surface that is said woven fabric, and against said stitch (2a or 2b), so that said molten glue (3) penetrates into the woven fabric layer (4a, 4b) of the laminated fabric(s), into the holes (20) created by the stitch punctures (10) and into between (19) the edges (9a, 9b) arranged in butt position.

2. A method according to claim 1, **characterized in that** further in the method: using, as garment material, laminated fabric (13) composed of two woven fabric layers (4a and 4b) arranged on both sides of said waterproof polymer film (5), in which laminated fabric the woven fabric layers are adherently laminated to said polymer film, and the woven fabric layers form said outer surface (14) and said inner surface (15).

3. A method according to claim 1 or 2, **characterized in that** further in the method: performing said sewing by an intermediate zig-zagstitch (2b) or by a zig-zagstitch (2a) that extends at least into said at least first section (11) and second section (12) connecting the those together.

4. A method according to claim 1 or 2 or 3, **characterized in that** the method further comprises the steps of:
- making said sealing by the adhesive strip (6 or 7) at first onto the outer surface (14) or onto the inner surface (15) of the laminated fabric(s); and thereafter
- making said sealing by the adhesive strip (7 or 6) onto the inner surfaces (15) or respectively onto the outer surfaces (14) of the laminated fabric(s).

5. A method according to any of the preceding claims, **characterized in that** in the method, there is used a thread (16) that is made completely of natural fiber, or a thread that is made of a combination of natural and synthetic fibers; and that the employed natural fiber is cotton fiber and/or flax fiber and/or silk.

6. A method according to any of the preceding claims, **characterized in that** further in the method:
- using for said sealing an adhesive strip (6 and/or 7) with the glue (3) having the melting temperature (T1) at least 135° C; and
- using a thread (16) having a hot strength at the melting temperature (T1) is at least 80 % of the cold strength of the fibers at room temperature.

7. A method according to any of the preceding claims, **characterized in that** further in the method:
- heating the adhesive strip (6, 7) at least by hot air blasting (30) with an air temperature (T2) that is higher than said melting temperature (T1); and
- creating said compression (F) by feeding at least the first and second section (11, 12) at the area of the stitch (2a, 2b) therebetween together with the adhesive strip (6 or 7) in between rotating compression rollers (31, 32).

8. A method according to any of the preceding claims, **characterized in that** gluing of said adhesive strip (6 or 7) or strips (6 and 7) is the last step in the method, whereupon no additional layers are glued onto said adhesive strip or strips.

9. A watertight stitched seam used in garments, material of which comprises at least one sheet of laminated fabric (13) composed of at least one woven fabric layer (4a, 4b) and at least one waterproof polymer film (5), whereupon said laminated fabric has at least two sections (11, 12) with edges (9a, 9b), and the watertight stitched seam (1) comprises:
- said at least two edges arranged in a mutual butt position;
- a stitch (2a, 2b) having a stitch width (W1) extending across the edges (9a, 9b) arranged in butt position, and stitch punctures (10) with thread(s) (16) extending through both sections of the laminated fabric, and
- at least one adhesive strip (6, 7) composed of a woven fabric (8a, 8b) and a layer of glue (3) of the type that sticks only at the melting temperature (T1), substantially higher than room temperature, by which glue said adhesive strip is attached to the laminated fabric, thus covering said stitch,
**characterized in that** further in the watertight stitched seam (1):
- the stitch (2a, 2b) has a thread (16) containing at least one natural fiber, which thread is substantially undamaged in the contact areas of the thread and the glue of said adhesive strip;
- said adhesive strip is in contact with the woven fabric layer (4a, 4b) of the laminated fabric and with the stitch thread (16) along the whole stitch width (W1); and
- said glue (3) is penetrated in the woven fabric layer (4a, 4b) of the laminated fabric/fabrics, in the holes (20) caused by the stitch punctures (10) and in between (19) the edges (9a, 9b) placed in butt position.

10. A watertight stitched seam according to claim 9 or 10, **characterized in that** the laminated fabric (13) comprises two woven fabric layers (4a, 4b) and a waterproof polymer film (5) therebetween.

11. A watertight stitched seam according to claim 9 or 10, **characterized in that** said stitch (2a, 2b) is an intermediate zig-zagstitch or a zig-zagstitch.

12. A watertight stitched seam according to any of the claims 9 - 11, **characterized in that** the material of the thread (16) contains at least cotton fiber and/or flax fiber and/or silk fiber.

13. A watertight stitched seam according to any of the claims 9 - 12, **characterized in that** said laminated fabric forms an outer (14) and an inner surface (15) of the garment; that said stitched seam has two of said adhesive strips (6 and 7), one against the outer surface (14) of the laminated fabric and the other against the inner surface (15) of the laminated fabric; and that both of said adhesive strips are in contact with the woven fabric layer (4a, 4b) and stitch thread (16) along the dimension of the stitch width (W1).

14. A watertight stitched seam according to any of the claims 9-13, **characterized in that** said laminated fabric comprises three sections (11, 12, 23), and said watertight stitched seam comprises two intersecting stitches (2a) with adhesive strips (6, 7) on both stitches.

15. A watertight stitched seam according to claim 14, **characterized in that** when the stitched seam comprises at least two mutually intersecting stitches (2a), at least one upper adhesive strip (6 and/or 7) laying on one of said stitches extends over at least one lower adhesive strip (6 and/or 7) laying on another of said stitches, whereupon the glue (3) in said upper adhesive strip is penetrated in the woven fabric (8a, 8b) of said lower adhesive strip.

16. A watertight stitched seam according to any of the claims 9 - 13, **characterized in that** the woven fabric layers (8a, 8b) of the adhesive strip(s) (6, 7), together with the sewn laminated fabric (13), form ready-made outer surfaces (14, 15).

## Patentansprüche

1. Verfahren zum Herstellen von wasserdichten genähten Säumen (1) bei Bekleidung, wobei das Verfahren die folgenden Schritte umfasst:
- Bereitstellen eines laminierten Gewebes (13), das mindestens aus einer Gewebeschicht (4a, 4b) und einem wasserdichten Polymerfilm (5) besteht, die aneinander laminiert sind und mindestens erste und zweite Abschnitte (11, 12) einschließen, die aneinander befestigt werden sollen, wobei die Abschnitte Kanten (9a, 9b) aufweisen;
- Positionieren der Kanten (9a und 9b) der Abschnitte des laminierten Gewebes oder der laminierten Gewebe, die in einer gegenseitigen Stoßlage aneinander befestigt werden sollen;
- Zusammennähen des laminierten Gewebes/der laminierten Gewebe durch eine Naht (2a, 2b), die Einstiche (10) für einen Faden oder Fäden (16) und eine Nahtbreite (W1) umfasst, wobei die Naht parallel zu der Richtung der in Stoßlage angeordneten Kanten verläuft, und wobei sich die Nahtbreite über die in Stoßlage angeordneten Kanten (9a, 9b) erstreckt; und
- Abdichten der Naht (2a, 2b) durch einen Klebestreifen (6, 7), der mindestens aus einem Gewebe (8a, 8b) besteht, das mit einer Klebstoffschicht (3) beschichtet ist, wobei der Klebstoff (3) eine wesentlich höhere Schmelztemperatur als Raumtemperatur (T1) aufweist;
- Befestigen des Klebestreifens mittels seiner klebenden Klebstoffschicht auf dem(den) laminierten Gewebe(n) an der Naht durch Erwärmen des Klebestreifens (6 oder 7) mindestens bis auf die genannte Schmelztemperatur;
- Aushärten lassen des Klebstoffs (3),
**dadurch gekennzeichnet, dass** das Verfahren ferner in Kombination die folgenden Schritte umfasst:
- Verwenden von laminiertem Gewebe (13), das heißt ein Bekleidungsmaterial, das Bekleidungsaußenseite (14) und -innenseite (15) darstellt;
- Ausführen des Nähens unter Verwendung eines Fadens (16), der mindestens eine Naturfaser enthält; und
- Komprimieren (F) des Klebestreifens, wobei sich der daran befindliche Klebstoff über die gesamte Streifenbreite (W2) des Klebestreifens erstreckt, auf dem ersten und einem zweiten Abschnitt (11, 12) mindestens gegen die Außenseite oder Innenseite, dass heißt gegen das Gewebe, und gegen die Naht (2a oder 2b), so dass der geschmolzene Klebstoff (3) in die Gewebeschicht (4a, 4b) des(der) laminierten Gewebes(Gewebe), in die Löcher (20) eindringt, die durch die Einstiche (10) erzeugt werden, und zwischen (19) die in Stoßlage angeordneten Kanten (9a, 9b) hinein.

2. Verfahren nach Anspruch 1, **dadurch gekennzeichnet, dass** bei dem Verfahren ferner: als Bekleidungsmaterial laminiertes Gewebe (13) verwendet wird, das aus zwei Gewebeschichten (4a und 4b) besteht, die auf beiden Seiten des genannten wasserdichten Polymerfilms (5) angeordnet sind, wobei bei dem laminierten Gewebe die Gewebeschichten klebend auf den Polymerfilm laminiert sind, und die Gewebeschichten die Außenseite (14) und die Innenseite (15) ausbilden.

3. Verfahren nach Anspruch 1 oder 2, **dadurch gekennzeichnet, dass** bei dem Verfahren ferner: das Nähen durch einen verbundenen Zick-Zack-Stich (2b) oder durch einen Zick-Zack-Stich (2a) durchgeführt wird, der sich mindestens bis in den mindestens ersten Abschnitt (11) und zweiten Abschnitt (12) erstreckt und jene miteinander verbindet.

4. Verfahren nach Anspruch 1 oder 2 oder 3, **dadurch gekennzeichnet, dass** das Verfahren ferner die folgenden Schritte umfasst:
- Erstellen des Abdichtens durch den Klebestreifen (6 oder 7) zuerst auf der Außenseite (14) oder auf der Innenseite (15) des(der) laminierten Gewebes(Gewebe); und danach
- Erstellen des Abdichtens durch den Klebestreifen (7 oder 6) auf den Innenseiten (15) oder jeweils auf den Außenseiten (14) des(der) laminierten Gewebes(Gewebe).

5. Verfahren nach einem der vorhergehenden Ansprüche, **dadurch gekennzeichnet, dass** bei dem Verfahren ein Faden (16) verwendet wird, der vollständig aus Naturfaser hergestellt ist, oder ein Faden, der aus einer Kombination von Natur- und Synthetikfasern hergestellt ist; und dass die eingesetzte Naturfaser Baumwollfaser und/oder Flachsfaser und/oder Seide ist.

6. Verfahren nach einem der vorhergehenden Ansprüche, **dadurch gekennzeichnet, dass** bei dem Verfahren ferner:
- ein Klebestreifen (6 und/oder 7) mit dem Klebstoff (3) für das Abdichten verwendet wird, der die Schmelztemperatur (T1) von mindestens 135 °C aufweist; und
- ein Faden (16) verwendet wird, der bei der Schmelztemperatur (T1) eine Warmfestigkeit aufweist, die mindestens 80 % der Kaltfestigkeit der Fasern bei Raumtemperatur beträgt.

7. Verfahren nach einem der vorhergehenden Ansprüche, **dadurch gekennzeichnet, dass** bei dem Verfahren ferner:
- der Klebestreifen (6, 7) mindestens durch Heißluftblasen (30) bei einer Lufttemperatur (T2) erwärmt wird, die höher als die Schmelztemperatur (T1) ist; und
- die genannte Kompression (F) durch Zuführen von mindestens dem ersten und zweiten Abschnitt (11, 12) mit dem dazwischen liegenden Bereich der Naht (2a, 2b) zusammen mit dem Klebestreifen (6 oder 7) zwischen rotierenden Druckrollen (31, 32) erzeugt wird.

8. Verfahren nach einem der vorhergehenden Ansprüche, **dadurch gekennzeichnet, dass** das Kleben des Klebestreifens (6 oder 7) oder der Streifen (6 und 7) der letzte Schritt in dem Verfahren ist, woraufhin keine zusätzlichen Schichten mehr auf den oder die Klebestreifen geklebt werden.

9. Wasserdichter genähter Saum, der bei Bekleidung verwendet wird, deren Material mindestens eine Bahn laminierten Gewebes (13) umfasst, das aus mindestens einer Gewebeschicht (4a, 4b) und mindestens einem wasserdichten Polymerfilm (5) besteht, wodurch das laminierte Gewebe mindestens zwei Abschnitte (11, 12) mit Kanten (9a, 9b) aufweist, und der wasserdichte genähte Saum (1) umfasst:
- die mindestens zwei Kanten, die in einer gegenseitigen Stoßlage angeordnet sind;
- eine Naht (2a, 2b), die eine Nahtbreite (W1), die sich über die in Stoßlage angeordneten Kanten (9a, 9b) erstreckt, und Einstiche (10) mit Faden (Fäden) (16) aufweist, die sich durch beide Abschnitte des laminierten Gewebes hindurch erstrecken, und
- mindestens einen Klebestreifen (6, 7), der aus einem Gewebe (8a, 8b) und einer Klebstoffschicht (3) der Art besteht, die nur bei der Schmelztemperatur (T1) klebt, welche wesentlich höher als Raumtemperatur ist, wobei der Klebestreifen durch den Klebstoff an dem laminierten Gewebe befestigt ist, wobei infolgedessen die Naht verdeckt wird,
**dadurch gekennzeichnet, dass** ferner bei dem wasserdichten genähten Saum (1):
- die Naht (2a, 2b) einen Faden (16) aufweist, der mindestens eine Naturfaser enthält, wobei der Faden an den Kontaktbereichen des Fadens und des Klebstoffes des Klebestreifens im Wesentlichen unbeschädigt ist;
- der Klebestreifen mit der Gewebeschicht (4a, 4b) des laminierten Gewebes und mit dem Nahtfaden (16) entlang der gesamten Nahtbreite (W1) in Kontakt ist; und
- der Klebstoff (3) in die Gewebeschicht (4a, 4b) des laminierten Gewebes/der laminierten Gewebe, in die Löcher (20), die durch die Einstiche (10) verursacht werden, und zwischen (19) die in Stoßlage platzierten Kanten (9a, 9b) hinein eingedrungen ist.

10. Wasserdichter genähter Saum nach Anspruch 9 oder 10, **dadurch gekennzeichnet, dass** das laminierte Gewebe (13) zwei Gewebeschichten (4a, 4b) und dazwischen einen wasserdichten Polymerfilm (5) umfasst.

11. Wasserdichter genähter Saum nach Anspruch 9 oder 10, **dadurch gekennzeichnet, dass** die Naht (2a, 2b) aus einem verbundenen Zick-Zack-Stich oder einem Zick-Zack-Stich besteht.

12. Wasserdichter genähter Saum nach einem der Ansprüche 9 bis 11, **dadurch gekennzeichnet, dass** das Material des Fadens (16) mindestens Baumwollfaser und/oder Flachsfaser und/oder Seidenfaser enthält.

13. Wasserdichter genähter Saum nach einem der Ansprüche 9 bis 12, **dadurch gekennzeichnet, dass** das laminierte Gewebe eine Außen- (14) und eine Innenseite (15) der Bekleidung ausbildet; dass der genähte Saum zwei der genannten Klebestreifen (6 und 7) aufweist, einen gegen die Außenseite (14) des laminierten Gewebes und den anderen gegen die Innenseite (15) des laminierten Gewebes; und dass beide der Klebestreifen mit der Gewebeschicht (4a, 4b) und dem Nahtfaden (16) entlang der Ausdehnung der Nahtbreite (W1) in Kontakt sind.

14. Wasserdichter genähter Saum nach einem der Ansprüche 9 bis 13, **dadurch gekennzeichnet, dass** das laminierte Gewebe drei Abschnitte (11, 12, 13) umfasst, und der wasserdichte genähte Saum zwei sich schneidende Nähte (2a) mit Klebestreifen (6, 7) auf beiden Nähten umfasst.

15. Wasserdichter genähter Saum nach Anspruch 14, **dadurch gekennzeichnet, dass**, wenn der genähte Saum mindestens zwei sich gegenseitig schneidende Nähte (2a) umfasst, mindestens ein oberer Klebestreifen (6 und/oder 7), der auf einer der Nähte liegt, sich mindestens über einen unteren Klebestreifen (6 und/oder 7) erstreckt, der auf einer anderen der Nähte liegt, wodurch der Klebstoff (3) von dem oberen Klebestreifen in das Gewebe (8a, 8b) des unteren Klebestreifen eingedrungen ist.

16. Wasserdichter genähter Saum nach einem der Ansprüche 9 bis 13, **dadurch gekennzeichnet, dass** die Gewebeschichten (8a, 8b) des Klebestreifens (der Klebestreifen) (6, 7), zusammen mit dem genähten laminierten Gewebe (13), fertige Außenseiten (14, 15) ausbilden.

## Revendications

1. Procédé de fabrication de coutures piquées étanches à l'eau (1) dans des vêtements, ledit procédé comprenant les étapes:
- fournir une étoffe laminée (13) composée d'au moins une couche de tissé (4a, 4b) et d'un film polymère imperméable à l'eau (5) qui sont laminés ensemble, et comprenant au moins des première et deuxième sections (11, 12) à attacher ensemble, lesdites sections ayant des bords (9a, 9b) ;
- positionner les bords (9a et 9b) des sections de ladite étoffe ou desdites étoffes laminée(s) à attacher ensemble dans une position bout-à-bout mutuelle ;
- coudre l'étoffe/les étoffes laminée(s) ensemble par un point de liage (2a, 2b) comprenant des perforations de point de liage (10) pour un fil ou des fils (16) et une largeur de point de liage (W1), ledit point de liage s'étendant en parallèle à la direction des bords agencés dans une position bout-à-bout, et ladite largeur de point de liage s'étendant sur les bords (9a, 9b) agencés dans une position bout-à-bout ; et
- étanchéifier le point de liage (2a, 2b) par une bande adhésive (6, 7) composée d'au moins un tissé (8a, 8b) enduit par une couche de colle (3), laquelle colle (3) présente une température de fusion sensiblement supérieure à la température ambiante (T1) ;
- attacher ladite bande adhésive, au moyen de sa couche de colle adhésive, à l'étoffe/aux étoffes laminée(s) au niveau dudit point de liage par chauffage de la bande adhésive (6 ou 7) au moins jusqu'à ladite température de fusion ;
- laisser la colle (3) durcir,
**caractérisé en ce que** le procédé comprend en outre en combinaison les étapes:
- utiliser l'étoffe laminée (13) qui est un matériau pour vêtement constituant une surface externe (14) et une surface interne (15) d'un vêtement ;
- exécuter ladite couture en utilisant un fil (16) qui contient au moins une fibre naturelle ; et
- compresser (F) ladite bande adhésive, la colle étant sur celle-ci s'étendant sur toute la largeur de bande (W2) de la bande adhésive, sur la première et une deuxième sections (11, 12) au moins contre ladite surface externe ou ladite surface interne qui est ledit tissé, et contre ledit point de liage (2a, 2b), de sorte que ladite colle fondue (3) pénètre dans la couche de tissé (4a, 4b) de l'étoffe/des étoffes laminée(s), dans les trous (20) créés par les perforations de point de liage (10) et dans entre (19) les bords (9a, 9b) agencés dans une position bout-à-bout.

2. Procédé selon la revendication 1, **caractérisé en outre en ce que** dans le procédé on utilise, en tant que matériau pour vêtement, une étoffe laminée (13) composée de deux couches de tissé (4a et 4b) agencées sur les deux côtés dudit film polymère imperméable à l'eau (5), dans laquelle étoffe laminée les couches de tissé sont laminées par collage audit film polymère, et les couches de tissé forment ladite surface externe (14) et ladite surface interne (15).

3. Procédé selon la revendication 1 ou la revendication 2, **caractérisé en ce qu'**en outre dans le procédé on réalise ladite couture au moyen d'un point de liage en zigzag intermédiaire (2b) ou au moyen d'un point de liage en zigzag (2a) qui s'étend au moins dans ladite au moins première section (11) et deuxième section (12) connectant celles-ci ensemble.

4. Procédé selon la revendication 1 ou la revendication 2 ou la revendication 3, **caractérisé en ce que** le procédé comprend en outre les étapes:
- réaliser ladite étanchéification au moyen de la bande adhésive (6 ou 7) tout d'abord sur la surface externe (14) ou sur la surface interne (15) de l'étoffe/des étoffes laminée(s) ; et ensuite
- réaliser ladite étanchéification par la bande adhésive (7 ou 6) sur les surfaces internes (15) ou respectivement sur les surfaces externes (14) de l'étoffe/des étoffes laminée(s).

5. Procédé selon l'une quelconque des revendications précédentes, **caractérisé en ce que** dans le procédé, il est utilisé un fil (16) qui est fabriqué complètement en fibre naturelle, ou un fil qui est fabriqué d'une combinaison de fibres naturelles et synthétiques ; et **en ce que** la fibre naturelle utilisée est de la fibre de coton et/ou de la fibre de lin et/ou de la soie.

6. Procédé selon l'une quelconque des revendications précédentes, **caractérisé en outre en ce que** dans le procédé :
- on utilise pour ladite étanchéification une bande adhésive (6 et/ou 7) avec la colle (3) ayant la température de fusion (T1) à au moins 135° C ; et
- on utilise un fil (16) présentant une résistance à chaud à la température de fusion (T1) qui est au moins 80 % de la résistance à froid des fibres à la température ambiante.

7. Procédé selon l'une quelconque des revendications précédentes, **caractérisé en ce qu'**en outre dans le procédé :
- on chauffe la bande adhésive (6, 7) au moins par projection par air forcé chaud (30) avec une température de l'air (T2) qui est supérieure à ladite température de fusion (T1) ; et
- on créé ladite compression (F) en alimentant au moins les première et deuxième sections (11, 12) au niveau du point de liage (2a, 2b) entre elle avec la bande adhésive (6 ou 7) entre des rouleaux de compression rotatifs (31, 32).

8. Procédé selon l'une quelconque des revendications précédentes, **caractérisé en ce que** le collage de ladite bande adhésive (6 ou 7) ou desdites bandes adhésives (6 et 7) est la dernière étape dans le procédé, après quoi aucune couche supplémentaire n'est collée sur ladite bande ou lesdites bandes adhésive(s).

9. Couture piquée étanche à l'eau utilisée dans des vêtements, dont le matériau comprend au moins une feuille d'étoffe laminée (13) composée d'au moins une couche de tissé (4a, 4b) et au moins un film polymère imperméable à l'eau (5), après quoi ladite étoffe laminée présente au moins deux sections (11, 12) avec des bords (9a, 9b), et la couture piquée étanche à l'eau (1) comprends :
- lesdits au moins deux bords agencés dans une position bout-à-bout mutuelle ;
- un point de liage (2a, 2b) présentant une largeur de point de liage (W1) s'étendant sur les bords (9a, 9b) agencés dans une position bout-à-bout, et des perforations de point de liage (10) avec un/des fil(s) (16) s'étendant au travers des deux sections de l'étoffe laminée ; et
- au moins une bande adhésive (6, 7) composée d'un tissé (8a, 8b) et une couche de colle (3) du type qui colle seulement à la température de fusion (T1), sensiblement supérieure à la température ambiante, au moyen de laquelle colle ladite bande adhésive est attachée à l'étoffe laminée, couvrant ainsi ledit point de liage ;
**caractérisé en ce que** dans la couture piquée étanche à l'eau (1) en outre :
- le point de liage (2a, 2b) présente un fil (16) contenant au moins une fibre naturelle, lequel fil est sensiblement non-endommagé au niveau des surfaces de contact du fil et la colle de ladite bande adhésive ;
- ladite bande adhésive est au contact de la couche de tissé (4a, 4b) de l'étoffe laminée et avec le fil de point de liage (16) le long de toute la largeur de point de liage (W1) ; et
- ladite colle (3) est pénétrée dans la couche de tissé (4a, 4b) de l'étoffe/des étoffes laminée(s), dans les trous (20) provoqués par les perforations de point de liage (10) et entre (19) les bords (9a, 9b) placés dans une position bout-à-bout.

10. Couture piquée étanche à l'eau selon la revendication 9 ou la revendication 10, **caractérisée en ce que** l'étoffe laminée (13) comprend deux couches de tissé (4a, 4b) et un film polymère imperméable à l'eau (5) entre elles.

11. Couture piquée étanche à l'eau selon la revendication 9 ou la revendication 10, **caractérisée en ce que** ledit point de liage (2a, 2b) est un point de liage en zigzag intermédiaire ou un point de liage en zigzag.

12. Couture piquée étanche à l'eau selon l'une quelconque des revendications 9 - 11, **caractérisée en ce que** le matériau du fil (16) contient au moins de la fibre de coton et/ou de la fibre de lin et/ou de la soie.

13. Couture piquée étanche à l'eau selon l'une quelconque des revendications 9 - 12, **caractérisée en ce que** ladite étoffe laminée forme une surface externe (14) et interne (15) du vêtement ; **en ce que** ladite couture piquée présente deux desdites bandes adhésives (6 et 7), une contre la surface externe (14) de l'étoffe laminée et l'autre contre la surface interne (15) de l'étoffe laminée ; et **en ce que** les deux desdites bandes adhésives sont au contact de la couche de tissé (4a, 4b) et le fil du point de liage (16) le long de la dimension de la largeur du point de liage (W1).

14. Couture piquée étanche à l'eau selon l'une quelconque des revendications 9 - 13, **caractérisée en ce que** ladite étoffe laminée comprend trois sections (11, 12, 23), et ladite couture piquée étanche à l'eau comprend deux points de liage s'entrecroisant (2a) avec des bandes adhésives (6, 7) sur les deux points de liage.

15. Couture piquée étanche à l'eau selon la revendication 14, **caractérisée en ce que** quand la couture piquée comprend au moins deux points de liage s'entrecroisant mutuellement (2a), au moins une bande adhésive supérieure (6 et/ou 7) reposant sur un desdits points de liage s'étend sur au moins une bande adhésive inférieure (6 et/ou 7) reposant sur un autre desdits points de liage, après quoi la colle (3) dans ladite bande adhésive supérieure est pénétrée dans le tissé (8a, 8b) de ladite bande adhésive inférieure.

16. Couture piquée étanche à l'eau selon l'une quelconque des revendications 9 - 13, **caractérisée en ce que** les couches de tissé (8a, 8b) de la/des bande(s) adhésive(s) (6, 7), ainsi que l'étoffe laminée cousue (13), forment des surfaces externes (14, 15) toutes faites.
